(19) Europäisches Patentamt
European Patent Office
Office européen des brevets

(11) EP 4 475 256 A1

(12) **EUROPEAN PATENT APPLICATION**
published in accordance with Art. 153(4) EPC

(43) Date of publication:
**11.12.2024 Bulletin 2024/50**

(21) Application number: **23747106.5**

(22) Date of filing: **27.01.2023**

(51) International Patent Classification (IPC):
***H01M 10/0567*** *(2010.01)* ***H01M 4/505*** *(2010.01)*
***H01M 4/525*** *(2010.01)* ***H01M 10/052*** *(2010.01)*

(52) Cooperative Patent Classification (CPC):
**H01M 4/505; H01M 4/525; H01M 10/052; H01M 10/0567;** Y02E 60/10

(86) International application number:
**PCT/JP2023/002697**

(87) International publication number:
**WO 2023/145896 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2022 JP 2022013120**

(71) Applicant: **Panasonic Intellectual Property Management Co., Ltd.**
**Kadoma-shi, Osaka 571-0057 (JP)**

(72) Inventors:
- **AKUTSU, Makoto**
  **Kadoma-shi, Osaka 571-0057 (JP)**
- **KUME, Toshiro**
  **Kadoma-shi, Osaka 571-0057 (JP)**

(74) Representative: **Novagraaf International SA**
**Chemin de l'Echo 3**
**1213 Onex, Geneva (CH)**

# (54) NONAQUEOUS ELECTROLYTE FOR NONAQUEOUS-ELECTROLYTE CELL, AND NONAQUEOUS-ELECTROLYTE CELL

(57) A nonaqueous electrolyte to be disclosed is a nonaqueous electrolyte for a nonaqueous electrolyte battery. The nonaqueous electrolyte contains a nonaqueous solvent, an electrolyte salt, and a heterocyclic compound containing at least one electron-withdrawing group R and a heterocyclic ring. The electron-withdrawing group R contains oxygen and/or nitrogen. The heterocyclic ring contains nitrogen and sulfur.

*FIG. 1*

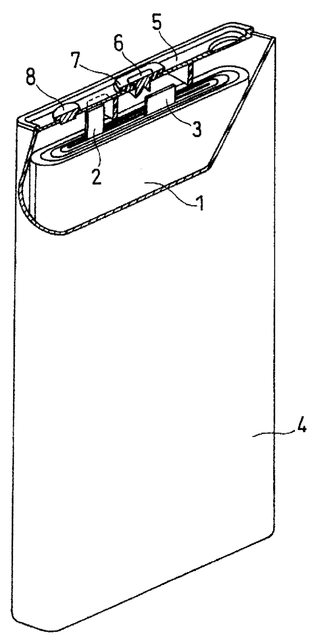

## Description

[Technical Field]

The present disclosure relates to a nonaqueous electrolyte for nonaqueous electrolyte battery, and a nonaqueous electrolyte battery.

[Background Art]

A nonaqueous electrolyte battery such as a lithium ion secondary battery includes a positive electrode, a negative electrode, and a nonaqueous electrolyte. Metal foreign matter such as copper or iron may be mixed into the positive electrode of the nonaqueous electrolyte battery. In such a case, metal foreign matter may be dissolved and deposited on the negative electrode due to the battery being charged or discharged. When metal foreign matter is deposited on the negative electrode, battery properties (e.g., voltage) are likely to deteriorate.

PTL 1 (Japanese Patent No. 5935228) discloses "a lithium ion secondary battery comprising: an electrolyte solution, in which the electrolyte solution contains a lithium salt, an electrolyte solvent, and methanethiol, the electrolyte solution contains the methanethiol in an amount of 1 to 10 parts by weight with respect to 100 parts by weight of the electrolyte solution, and the methanethiol reacts with copper ions generated during battery operation to prevent the formation of dendrites due to copper reduction on the surface of the negative electrode".

[Citation List]

[Patent Literature]

PTL 1: Japanese Patent No. 5935228

[Summary of Invention]

[Technical Problem]

However, dissolution and deposition of metal foreign matter in the secondary battery described in PTL 1 was insufficiently suppressed. Under such circumstances, one of objects of the present disclosure is to provide a nonaqueous electrolyte capable of suppressing deterioration of properties of a nonaqueous electrolyte battery through dissolution and deposition of metal foreign matter.

[Solution to Problem]

One aspect according to the present disclosure relates to a nonaqueous electrolyte for a nonaqueous electrolyte battery. The nonaqueous electrolyte contains a nonaqueous solvent, an electrolyte salt, and a heterocyclic compound containing at least one electron-withdrawing group R and a heterocyclic ring, in which the electron-withdrawing group R contains oxygen and/or nitrogen, and the heterocyclic ring contains nitrogen and sulfur.

Another aspect according to the present disclosure relates to a nonaqueous electrolyte battery. The nonaqueous electrolyte battery includes a positive electrode containing a positive electrode active material, a negative electrode opposing the positive electrode, and the nonaqueous electrolyte according to the present disclosure.

[Advantageous Effects of Invention]

According to the present disclosure, it is possible to suppress deterioration of properties of a nonaqueous electrolyte battery through dissolution and deposition of metal foreign matter.

While novel features of the present invention are set forth particularly in the appended claims, the present invention, both as to organization and content, will be better understood and appreciated, along with other objects and features thereof, from the following detailed description taken in conjunction with the drawings.

[Brief Description of Drawings]

[FIG. 1] A partially cutaway schematic perspective view of a non-electrolyte battery according to an embodiment of the present disclosure.

[Description of Embodiments]

Although an embodiment according to the present disclosure will be described below using an example, the present disclosure is not limited to an example described below. Although specific numerical values and materials may be mentioned as examples in the following description, other numerical values and other materials may be used as long as the invention according to the present disclosure can be implemented. The term "range of numerical value Ato numerical value B" used in this specification includes the numerical value A and the numerical value B, and can be read as "range of numerical value A or more and numerical value B or less". In the following description, when lower limits and upper limits of numerical values regarding specific physical properties, conditions, or the like are given as examples, any of the above-mentioned lower limits and any of the above-mentioned upper limits can be combined, as long as the lower limit is not greater than or equal to the upper limit. In the following description, the expression "contains A" may include "a form substantially composed of A" and "a form composed of A".

(Nonaqueous Electrolyte)

A nonaqueous electrolyte according to this embodiment is a nonaqueous electrolyte for a nonaqueous electrolyte battery. The nonaqueous electrolyte contains a nonaqueous solvent, an electrolyte salt, and a heterocyclic compound containing at least one electron-withdrawing group R and a heterocyclic ring. The heterocyclic ring and the heterocyclic compound may be respectively referred to as a "heterocyclic ring (H)" and a "heterocyclic compound (C)" hereinafter. The electron-withdrawing group R contains oxygen and/or nitrogen. The heterocyclic ring (H) contains nitrogen and sulfur.

When metal foreign matter mixed into a battery is exposed to the positive electrode potential, metal ions may be eluted from the metal foreign matter into the nonaqueous electrolyte. These metal ions eluted into the nonaqueous electrolyte move from the positive electrode side to the negative electrode side, and are deposited on the negative electrode side. If such a dissolution-deposition reaction proceeds, then the deposited metal grows in a dendrite shape, resulting in deterioration of properties (e.g., voltage) of the nonaqueous electrolyte battery. Therefore, it is important to suppress deterioration of properties of a nonaqueous electrolyte battery through dissolution and deposition of metal foreign matter.

Because the nonaqueous electrolyte of the present disclosure contains the heterocyclic compound (C), deterioration of properties through metal dissolution-deposition reaction is significantly suppressed.

The heterocyclic compound (C) captures metal ions (e.g., copper ions) in the nonaqueous electrolyte with its heterocyclic ring (H), and suppresses the reduction-deposition reaction of metal ions at the negative electrode. In addition, the electron-withdrawing group R included in the heterocyclic compound (C) has the effect of enhancing the effect of the heterocyclic ring (H) to capture metal ions. Further, it is conceivable that the electron-withdrawing group R also captures metal ions in the nonaqueous electrolyte, and has the effect of suppressing the reduction-deposition reaction of metal ions at the negative electrode. In this manner, the metal ion capturing effect of the heterocyclic compound (C) is enhanced, and the heterocyclic compound (C) has a plurality of different atomic groups capable of capturing metal ions. A large number of metal ions are efficiently captured by these groups, and as a result, reduction deposition of metal ions is significantly suppressed.

Also, metal ions can generally be present in a plurality of different ion valences in a nonaqueous electrolyte. For example, copper ions can be present in two types of valence states, such as $Cu^+$ and $Cu^{2+}$, in the nonaqueous electrolyte, and $Cu^+$ and $Cu^{2+}$ have different electron acceptabilities. When there is only one type of atomic group that can form a coordinate bond with a metal ion, there are cases where a coordinate bond is easily formed with one of two metal ions that have different valences (e.g., monovalent copper ion), but is not easily formed with the other metal ion (e.g., divalent copper ion). In such a case, it is difficult to capture all the metal ions present in the battery. To address this, metal ions can be highly efficiently captured using a heterocyclic compound (C) having two or more different atomic groups that are likely to coordinate with metal ions depending on the valence of the metal ions.

The content rate of the heterocyclic compound (C) in the nonaqueous electrolyte may be 0.01% by mass or more, 0.1% by mass or more, or 0.5% by mass or more, and 10.0% by mass or less, 5.0% by mass or less, or 2.0% by mass or less. The content rate thereof may be in the range of 0.01% by mass to 10.0% by mass, 0.1% by massto 10.0% by mass, or 1.0% by mass to 10.0% by mass. In these ranges, the upper limit may be set to 5.0% by mass or less or 2.0% by mass or less. Note that the influence of the addition of the heterocyclic compound (C) on the charge and discharge characteristics of the battery can be alleviated by setting the content rate to 0.1% by mass to 5.0% by mass.

The nonaqueous electrolyte may contain, as the heterocyclic compound (C), one type of compound or multiple types of compounds.

The electron-withdrawing group R included in the heterocyclic compound (C) may have coordinate bonding properties with respect to metal ions. The electron-withdrawing group R contains oxygen and/or nitrogen. The electron-withdrawing group R contains at least one selected from oxygen and nitrogen. The electron-withdrawing group R may

contain only one or both of oxygen and nitrogen.

The electron-withdrawing group R may include or be at least one selected from the group consisting of a carbonyl group (-C(=O)-), a nitrile group (-C≡N), a sulfonyl group ($-S(=O)_2-$), an isocyanate group (-N=C=O), an isothiocyanate group (-N=C=S), and a hydroxy group (-OH). The hydroxy group, which is an electron-withdrawing group R, is bonded to a carbon atom that constitutes a saturated hydrocarbon group (e.g., an alkyl group or an alkylene group). The nitrile group may be included in the thionitrile group. The sulfonyl group may be included in a sulfonic acid ester bond ($-S(=O)_2-O-$). Note that the C=O site included in the isocyanate group and the isothiocyanate group is usually not treated as a carbonyl group. Thus, the C=O site included in the isocyanate group and the isothiocyanate group is not treated as a carbonyl group also in this specification.

The electron-withdrawing group R may be a carbonyl group, a nitrile group, a sulfonyl group, an isocyanate group, an isothiocyanate group, or a hydroxy group. The electron-withdrawing group R may be at least one selected from the group consisting of a carbonyl group, a nitrile group, a sulfonyl group, an isocyanate group, and an isothiocyanate group. The electron-withdrawing group R may be at least one selected from the group consisting of a carbonyl group, a nitril group, a sulfonyl group, an isocyanate group, and an isothiocyanate group. The electron-withdrawing group R may be at least one selected from the group consisting of a carbonyl group, a sulfonyl group, an isocyanate group, and an isothiocyanate group.

The carbonyl group may be included in at least one selected from the group consisting of an aldehyde group (-CHO), a ketone, an amide bond (C(=O)-N), an ester bond (COO), and a carboxy group (-COOH). That is, the electron-withdrawing group R may be at least one selected from the group consisting of an aldehyde group, a carbonyl group contained in a ketone, an amide bond, an ester bond, and a carboxy group.

The number of electron-withdrawing groups R included in the heterocyclic compound (C) may be 1, 2 or more, 5 or more, or 5 or less. The number of heterocyclic rings (H) included in the heterocyclic compound (C) may be 1, 2, 3 or less, or 3 or less.

The heterocyclic ring (H) contains nitrogen and sulfur. The heterocyclic ring (H) may have aromaticity or need not have aromaticity. The number of atoms that constitute a heterocyclic ring (H) may be in a range of 5 to 8, or a range of 5 to 7, or may be 5 or 6. That is, the heterocyclic ring (H) may be a five-membered ring, a six-membered ring, a seven-membered ring, or an eight-membered ring.

The heterocyclic ring (H) may satisfy the following conditions (1) and/or (2), and may also satisfy the following conditions (1) and (3).

(1) The heterocyclic ring (H) is constituted by one nitrogen atom, one sulfur atom, and a plurality of carbon atoms.
(2) The nitrogen atom forms a double bond with one of adjacent carbon atoms that constitute the heterocyclic ring (H).
(3) The nitrogen atom forms a single bond with each of two adjacent carbon atoms that constitute the heterocyclic ring (H).

The heterocyclic ring (H) may be a thiazole ring represented below.

[Chemical Formula 1]

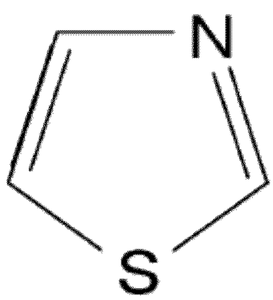

The heterocyclic ring (H) may be a thiomorpholine ring represented below.

[Chemical Formula 2]

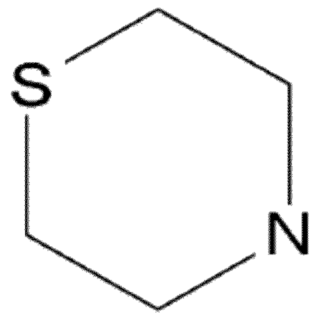

The heterocyclic ring (H) may be a thiazepine ring represented below. Note that the thiazepine ring may be a 1,3-thiazepine ring or a 1,4-thiazepine ring.

[Chemical Formula 3]

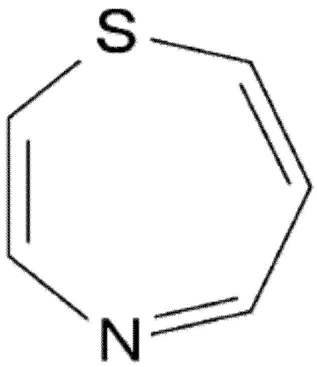

The heterocyclic ring (H) may include or be at least one selected from the group consisting of a thiazole ring, a thiomorpholine ring, and a thiazepine ring.

There is no limitation on the structure of the heterocyclic compound (C) other than the heterocyclic ring (H) and the electron-withdrawing group R, as long as effects of the present disclosure can be achieved. Portions other than the heterocyclic ring (H) and the electron-withdrawing group R may be composed only of hydrocarbons. Examples of hydrocarbons include hydrocarbon groups (including hydrocarbon chains). Examples of hydrocarbons include aliphatic hydrocarbons and aromatic hydrocarbons. The heterocyclic compound (C) may include an ether bond, a thioether bond, nitrogen that is not included in the electron-withdrawing group R, and the like.

The molecular weight of the heterocyclic compound (C) may be 100 or more, or 130 or more, and 400 or less, or 370 or less.

A compound that dissolves in a nonaqueous solvent for the nonaqueous electrolyte is preferably used as the heterocyclic compound (C).

Examples of the heterocyclic compound (C) include compounds shown in Table 1 below. The heterocyclic compound (C) may be at least one selected from the group consisting of 15 compounds shown in Table 1.

[Table 1]

| No. | Compound Name | CAS No. |
|---|---|---|
| 1 | 4,5-dimethyl-1,3-thiazole-2-carbaldehyde | 74531-15-0 |
| 2 | 4,5,6,7-tetrahydro-1,3-benzothiazole-2-carbaldehyde | 884504-72-7 |
| 3 | ethyl 2-ethynyl-4-methylthiazole-5-carboxylate | 1034981-10-6 |
| 4 | N-benzyl-2-ethynyl-4-methylthiazole-5-carboxamide | 1034981-11-7 |
| 5 | 4-methyl-5-(2-thiocyanatoethyl)thiazole | 109949-24-8 |
| 6 | perfluorophenyl 4,5-dimethylthiazole-2-sulfonate | 1354950-61-0 |
| 7 | 2-(trimethylsilyl)thiazole-4-carbaldehyde | 116045-55-7 |
| 8 | 4-(((tert-butyldimethylsilyl)oxy)methyl)thiazole-2-carbaldehyde | 2089257-00-9 |

(continued)

| No. | Compound Name | CAS No. |
|---|---|---|
| 9 | 1-(5-(hydroxymethyl)-4-methylthiazol-2-yl)ethan-1-one | 933753-01-6 |
| 10 | 5-isocyanato-4-methyl-2-phenylthiazole | 852180-46-2 |
| 11 | 5-isocyanato-4-methyl-2-(pyrazine-2-yl)thiazole | 799283-95-7 |
| 12 | 2-ethylthiomorpholine-4-carbaldehyde | 30188-23-9 |
| 13 | 2,3-dimethylthiomorpholine-4-carbaldehyde | 31507-18-3 |
| 14 | 2-methyl-4-thiocyanatobenzo[b][1,4]thiazepine | 111399-20-3 |
| 15 | 4-methyl-2-thiocyanatobenzo[b][1,4]thiazepine | 111399-21-4 |

The heterocyclic compound (C) may include or be at least one selected from the group consisting of 4,5-dimethyl-1,3-thiazole-2-carbaldehyde, 4,5,6,7-tetrahydro-1,3-benzothiazole-2-carbaldehyde, 2-ethylthiomorpholine-4-carbaldehyde, and 2,3-dimethylthiomorpholine-4-carbaldehyde. These compounds are preferable because high effects can be obtained.

Among the above heterocyclic compounds (C), 2-ethylthiomorpholine-4-carbaldehyde and 2,3-dimethylthiomorpholine-4-carbaldehyde are preferable because they are highly effective in capturing metal ions.

A commercially available compound may be used as the heterocyclic compound (C). Alternatively, the heterocyclic compound (C) may be synthesized according to a known synthesis method.

The content rate of the heterocyclic compound (C) in the nonaqueous electrolyte is determined using, for example, gas chromatography under the following conditions.

Instrument used: GC-2010 Plus manufactured by Shimadzu Corporation
Column: HP-1 manufactured by J&W (film thickness is 1 μm, inner diameter is 0.32 mm, length is 60 m)
Column Temperature: temperature is raised from 50°C to 90°C at a rate of 5°C/min, kept at 90°C for 15 minutes, and then temperature is raised from 90°C to 250°C at a rate of 10°C/min, and kept at 250°C for 15 minutes
Split ratio: 1/50
Linear velocity: 30.0 cm/sec
Inlet temperature: 270°C
Injection volume: 1 μL
Detector: FID 290°C (sens. $10^1$)

In one aspect, an example of the nonaqueous electrolyte according to this embodiment contains a nonaqueous solvent, an electrolyte salt, and a heterocyclic compound (C1). The heterocyclic compound (C1) includes at least one atomic group Z containing oxygen and/or nitrogen, and a heterocyclic ring (H). It is possible to use, as the atomic group Z, an atomic group given as examples of the electron-withdrawing group R. The atomic group Z may include or be at least one selected from the group consisting of a carbonyl group, a nitrile group, a sulfonyl group, and a hydroxy group. The hydroxy group, which is the atomic group Z, is bonded to a carbon atom that constitutes a saturated hydrocarbon group.

(Nonaqueous Electrolyte Battery)

A nonaqueous electrolyte battery according to this embodiment includes a positive electrode containing a positive electrode active material, a negative electrode opposing the positive electrode, and a nonaqueous electrolyte. The nonaqueous electrolyte is the nonaqueous electrolyte according to this embodiment. The nonaqueous electrolyte battery may also include other constituent elements. For example, the nonaqueous electrolyte battery usually further include a separator and an exterior body. The separator is disposed between a positive electrode and a negative electrode. The exterior body houses an electrode group including the positive electrode, the negative electrode, and a separator. There is no particular limitation on the positive electrode, the negative electrode, the separator, and the exterior body, and known ones may be used.

There is no particular limitation on a configuration of the nonaqueous electrolyte battery as long as effects of the present disclosure can be obtained. Examples of the nonaqueous electrolyte batteries include nonaqueous electrolyte secondary batteries and nonaqueous primary batteries. Examples of the nonaqueous electrolyte secondary batteries include lithium ion secondary batteries. Examples of the nonaqueous electrolyte primary batteries include metal lithium primary batteries. There is no particular limitation on the shape of a nonaqueous electrolyte battery, and the nonaqueous electrolyte battery may be cylindrical or rectangular. There is no particular limitation on the form of an electrode group of the

nonaqueous electrolyte battery, and the electrode group may be of a rolled-up or stacked type.

The positive electrode active material may have a layered rock salt type structure. In this case, the positive electrode active material may include a lithium transition metal composite oxide containing Ni and at least one selected from the group consisting of Co, Mn, and Al. The proportion of Ni in the metal elements other than Li contained in the lithium transition metal composite oxide may be 80 atomic% or more.

Examples of constituent elements of the nonaqueous electrolyte and the nonaqueous electrolyte battery according to this embodiment will be described below. However, constituent elements of this embodiment are not limited to the following examples.

(Nonaqueous Solvent)

Examples of a nonaqueous solvent include a cyclic carbonic acid ester, a chain carbonic acid ester, a cyclic carboxylic acid ester, and a chain carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate (MA), ethyl acetate, propyl acetate, methyl propionate, ethyl propionate, and propyl propionate. The nonaqueous electrolyte may contain one type of nonaqueous solvent, or two or more types of nonaqueous solvents.

(Electrolyte Salt)

Lithium salt is suitable as an electrolyte salt. Examples of the lithium salts include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylates, LiCl, LiBr, LiI, borates, and imide salts. Examples of the borates include lithium difluoro(oxalato)borate and lithium bis(oxalato)borate. Examples of the imide salts include lithium bis(fluorosulfonyl)imide ($LiN(FSO_2)_2$) and lithium bis(trifluoromethanesulfonate)imide ($LiN(CF_3SO_2)_2$). The nonaqueous electrolyte may contain one type of electrolyte salt, or may contain two or more types of electrolyte salts.

The concentration of the electrolyte salt in the nonaqueous electrolyte is, for example, 0.5 mol/L or more and 2 mol/L or less.

The nonaqueous electrolyte may also contain other additives. Examples of the other additives include at least one selected from the group consisting of vinylene carbonate, fluoroethylene carbonate, and vinyl ethylene carbonate.

The nonaqueous electrolyte may also contain other compounds other than the heterocyclic compound (C) as an additive that suppresses dissolution-deposition reaction of metal ions. Examples of such compounds include an isocyanate compound having an isocyanate group and/or a nitrile compound having two or more nitrile groups. The isocyanate compound is reductively decomposed at the negative electrode, forms a film on the surface of the negative electrode active material (e.g., a carbon material such as graphite), and functions to suppress reductive decomposition of the nonaqueous electrolyte. As a result, reduction-deposition reaction of metal ions can be suppressed. On the other hand, a nitrile compound is oxidized at the positive electrode, and functions to form a film on the positive electrode active material. As a result, dissolution of metal ions that constitute the positive electrode active material into the nonaqueous electrolyte can be suppressed. However, the heterocyclic compound (C) according to the present disclosure is significantly superior to isocyanate compounds and nitrile compounds in suppressing dissolution-deposition reaction of metal ions.

(Positive Electrode)

The positive electrode contains a positive electrode active material. The positive electrode usually includes a positive electrode current collector, and a layer-shaped positive electrode mixture (referred to as a "positive electrode mixture layer" hereinafter) held on the positive electrode current collector. In an example of a method for forming the positive electrode mixture layer, first, a positive electrode slurry is produced by dispersing constituent components of the positive electrode mixture in a dispersion medium. Then, the positive electrode mixture layer can be formed by applying, to the surface of the positive electrode current collector, a positive electrode slurry to form a coating film, and drying the coating film. The dried coating film may be rolled as needed. The positive electrode mixture contains a positive electrode active material as an essential component, and may contain a binding agent, a thickener, and the like as optional components.

(Positive Electrode Active Material)

There is no particular limitation on the positive electrode active material as long as it can be used as a positive

electrode active material of a nonaqueous electrolyte battery (e.g., a lithium ion secondary battery). Examples of preferable positive electrode active material include lithium transition metal composite oxides that have a layered rock salt type structure and containing Ni and at least one selected from the group consisting of Co, Mn, and Al.

Here, from the viewpoint of achieving a high capacity, it is desired that the proportion of Ni in the metal elements other than Li contained in the lithium transition metal composite oxide is 80 atomic% or more. The proportion of Ni in the metal elements other than Li may be 85 atomic% or more, or 90 atomic% or more. It is desired that the proportion of Ni in the metal elements other than Li contained may be 95 atomic% or less. When limiting the range, the lower limits and the upper limits can be combined suitably.

Hereinafter, a lithium transition metal composite oxide that satisfies the following conditions (1) to (3) may be referred to as a "composite oxide HN".

(1) The composite oxide HN has a layered rock salt type structure.
(2) The composite oxide HN includes Ni and at least one selected from the group consisting of Co, Mn, and Al.
(3) The proportion of Ni in the metal elements other than Li in the composite oxide HN is 80 atomic% or more.

Li ions can be reversibly inserted into and extracted from layers of the layered rock salt type structure of the composite oxide HN. The higher the proportion of Ni is, the more lithium ions can be extracted from the composite oxide HN while the battery is charged, and capacity can be increased.

Co, Mn, and Al contribute to stabilizing the crystal structure of the composite oxide HN having a high Ni content rate. However, from the viewpoint of production cost reduction, the lower the Co content rate is, the more desirable the composite oxide HN is. The composite oxide HN that has a low Co content rate or does not contain Co may contain Mn and Al.

The proportion of Co in the metal elements other than Li is preferably 10 atomic% or less, more preferably 5 atomic% or less, or does not need to contain Co. From the viewpoint of stabilizing the crystal structure of the composite oxide HN, it is desired that the composite oxide HN contains Co in an amount of 1 atomic% or more, or 1.5 atomic% or more.

The proportion of Mn in the metal elements other than Li may be 10 atomic% or less, or 5 atomic% or less. The proportion of Mn in the metal elements other than Li may be 1 atomic% or more, 3 atomic% or more, or 5 atomic% or more. When limiting the range, the lower limits and the upper limits can be combined suitably.

The proportion of Al in the metal elements other than Li may be 10 atomic% or less, or 5 atomic% or less. The proportion of Al in the metal elements other than Li may be 1 atomic% or more, 3 atomic% or more, or 5 atomic% or more. When limiting the range, the lower limits and the upper limits can be combined suitably.

The composite oxide HN is represented by, for example, Formula: $Li_{\alpha}Ni_{(1-x1-x2-y-z)}Co_{x1}Mn_{x2}Al_{y}M_{z}O_{2+\beta}$. The element M is an element other than Li, Ni, Co, Mn, Al, and oxygen.

In the above formula, $\alpha$ that indicates the atomic ratio of lithium is, for example, $0.95 \leq \alpha \leq 1.05$. Note that $\alpha$ increases or decreases due to a battery being charged/discharged. In $(2+\beta)$ that indicates the atomic ratio of oxygen, $\beta$ satisfies $-0.05 \leq \beta \leq 0.05$.

1-x1-x2-y-z (=v), which indicates the atomic ratio of Ni, is 0.8 or more, or may be 0.85 or more, 0.90 or more, or 0.95 or more. Also, v, which indicates the atomic ratio of Ni, may be 0.98 or less, or 0.95 or less. When limiting the range, the lower limits and the upper limits can be combined suitably.

x1, which indicates the atomic ratio of Co, is, for example, 0.1 or less ($0 \leq x1 \leq 0.1$), and may be 0.08 or less, 0.05 or less, or 0.01 or less. A case where x1 is 0 also include cases where Co is less than or equal to the detection limit.

x2, which indicates the atomic ratio of Mn, is, for example, 0.1 or less ($0 \leq x2 \leq 0.1$), and may be 0.08 or less, 0.05 or less, or 0.03 or less. x2 may be 0.01 or more, or 0.03 or more. Mn contributes to stabilizing the crystal structure of the composite oxide HN, and the composite oxide HN containing inexpensive Mn is advantageous for cost reduction. When limiting the range, the lower limits and the upper limits can be combined suitably.

y, which indicates the atomic ratio of Al, is, for example, 0.1 or less ($0 \leq y \leq 0.1$), and may be 0.08 or less, 0.05 or less, or 0.03 or less. y may be 0.01 or more, or 0.03 or more. Al contributes to stabilizing the crystal structure of the composite oxide HN. When limiting the range, the lower limits and the upper limits can be combined suitably.

z, which indicates the atomic ratio of the element M, satisfies, for example, $0 \leq z \leq 0.10$, $0 < z \leq 0.05$, or $0.001 \leq z \leq 0.01$. When limiting the range, the lower limits and the upper limits can be combined suitably.

The element M may be at least one selected from the group consisting of Ti, Zr, Nb, Mo, W, Fe, Zn, B, Si, Mg, Ca, Sr, Sc, and Y In particular, it is conceivable that, when the composite oxide HN contains at least one selected from the group consisting of Nb, Sr, and Ca, the surface structure of the composite oxide HN is stabilized, and resistance is reduced, and metal elution is further suppressed. The elements M are more effective when the elements M are unevenly distributed near the surfaces of particles of the composite oxide HN.

The content rate of elements that constitute the composite oxide HN can be measured using an inductively coupled plasma atomic emission spectroscopy (ICP-AES), an electron probe microanalyzer (EPMA), or an energy dispersive X-ray spectroscopy (EDX), or the like.

The composite oxide HN is, for example, secondary particles obtained through aggregation of primary particles. The particle size of primary particles is, for example, 0.05 μm or more and 1 μm or less. The average particle size of the secondary particles of the composite oxide HN is, for example, 3 μm or more and 30 μm or less, and may be 5 μm or more and 25 μm or less.

In this specification, the average particle size of secondary particles refers to the particle size (volume average particle size) at which the volume integrated value is 50% in a particle size distribution measured using a laser diffraction scattering method. Such a particle size may be referred to as D50. It is possible to use, for example, "LA-750" manufactured by HORIBALtd. as a measuring device.

The positive electrode active material may contain a lithium transition metal composite oxide other than the composite oxide HN, but the proportion of the composite oxide HN is preferably large. The proportion of the composite oxide HN in the positive electrode active material is, for example, 90% by mass or more, and may be 95% by mass or more, or 100%.

(Other Constituent Elements)

A resin material is used as a binding agent, for example. Examples of the binding agent include fluoropolymers, polyolefin resins, polyamide resins, polyimide resins, acrylic resins, vinyl resins, and rubber-like materials (e.g., styrene-butadiene copolymer (SBR)). These binding agents may be used alone or in combination.

Examples of the thickener include cellulose derivatives such as cellulose ether. Examples of cellulose derivatives include carboxymethyl cellulose (CMC) and modified products thereof, and methyl cellulose. These thickeners may be used alone or in combination.

Examples of the conductive material include carbon nanotubes (CNTs), carbon fibers other than CNTs, and conductive particles (e.g., carbon black and graphite).

There is no particular limitation on a dispersion medium used in a positive electrode slurry, and examples thereof include water, alcohols, N-methyl-2-pyrrolidone (NMP), and a mixed solvent thereof.

A metal foil is used as a positive electrode current collector, for example. The positive electrode current collector may be porous. Examples of a porous current collector include a net, a punched sheet, and an expanded metal. Examples of materials of the positive electrode current collector include stainless steel, aluminum, aluminum alloys, and titanium. There is no particular limitation on the thickness of the positive electrode current collector, and the thickness thereof is, for example, 1 to 50 μm, and may be 5 to 30 μm.

(Negative Electrode)

The negative electrode contains a negative electrode active material. The negative electrode usually includes a negative electrode current collector, and a layer-shaped negative electrode mixture (referred to as a "negative electrode mixture layer" hereinafter) held on the negative electrode current collector. The negative electrode mixture layer can be formed by applying, to the surface of the negative electrode current collector, a negative electrode slurry in which constituent components of the negative electrode mixture are dispersed in a dispersion medium, and drying the slurry. The dried coating film may be rolled as needed.

The negative electrode mixture contains a negative electrode active material as an essential component, and can contain a binding agent, a thickener, a conductive agent, and the like as optional components.

(Negative Electrode Active Material)

Although metallic lithium, a lithium alloy, or the like may be used as a negative electrode active material, a material that can electrochemically absorb and release lithium ions is suitably used. Examples of such materials include carbonaceous materials and Si-containing materials. The negative electrode may contain a negative-electrode active material alone or two or more negative-electrode active materials in combination.

Examples of the carbonaceous material include graphite, easily-graphitizable carbon (soft carbon), and hardly-graphitizable carbon (hard carbon). These carbonaceous materials may be used alone or in combination. In particular, graphite is preferable as a carbonaceous material because graphite has excellent charge/discharge stability and low irreversible capacity. Examples of graphite include natural graphite, artificial graphite, and graphitized mesophase carbon particles.

Examples of Si-containing materials include simple Si, a silicon alloy, a silicon compound (a silicon oxide or the like), and a composite material in which silicon phases are dispersed in a lithium ion-conducting phase (matrix). Examples of the silicon oxides include $SiO_x$ particles. x satisfies $0.5 \leq x < 2$, for example, and may satisfy $0.8 \leq x \leq 1.6$. It is possible to use, as the lithium ion conductive phase, at least one selected from the group consisting of a $SiO_2$ phase, a silicate phase, and a carbon phase.

As the binder, the thickener, the conductive agent, and the dispersion medium used in the negative-electrode slurry, it is possible to use the materials described as examples of materials of the positive electrode, for example.

It is possible to use a metal foil as the negative electrode current collector, for example. The negative electrode current collector may be porous. Examples of materials of the negative electrode current collector include stainless steel, nickel, nickel alloys, copper, and copper alloys. There is no particular limitation on the thickness of the negative electrode current collector, and the thickness thereof is, for example, 1 to 50 μm, and may be 5 to 30 μm.

(Separator)

It is desired that a separator is interposed between the positive electrode and the negative electrode. The separator has high ion permeability, appropriate mechanical strength, and insulating properties. It is possible to use a microporous thin film, woven cloth, nonwoven cloth, or the like as the separator. It is preferable to use a polyolefin such as polypropylene or polyethylene as the material of the separator.

An example of the structure of the nonaqueous electrolyte battery is a structure including an electrode group that is formed by rolling up the positive electrode and the negative electrode with the separator interposed therebetween and is housed in an exterior body together with the nonaqueous electrolyte. However, the structure of the nonaqueous electrolyte battery is not limited to this, and an electrode group of another form may also be used. For example, it is also possible to use a stacked-type electrode group in which the positive electrode and the negative electrode are stacked with the separator interposed therebetween. The shape of the nonaqueous electrolyte secondary battery is also not limited, and may be a cylindrical shape, a rectangular shape, a coin shape, a button shape, or a laminate shape, for example.

The nonaqueous electrolyte battery may be a primary battery or a secondary battery.

Hereinafter, a structure of a rectangular nonaqueous electrolyte secondary battery will be described as an example of the nonaqueous electrolyte battery according to the present invention with reference to FIG. 1.

The battery includes a rectangular battery case 4 having a bottom, and an electrode group 1 and a nonaqueous electrolyte (not shown) that are housed in the battery case 4. The electrode group 1 includes an elongated strip-shaped negative electrode, an elongated strip-shaped positive electrode, and a separator interposed therebetween. A negative electrode current collector of the negative electrode is electrically connected to a negative electrode terminal 6 provided on a sealing plate 5 via a negative electrode lead 3. The negative electrode terminal 6 is insulated from the sealing plate 5 by a resin gasket 7. A positive electrode current collector of the positive electrode is electrically connected to a back side of the sealing plate 5 via a positive electrode lead 2. That is, the positive electrode is electrically connected to the battery case 4, which also serves as a positive electrode terminal. A peripheral edge of the sealing plate 5 fits into an open end portion of the battery case 4, and the fitting portion is welded with a laser. The sealing plate 5 has a nonaqueous electrolyte injection hole, which is closed with a sealing plug 8 after injection. The nonaqueous electrolyte according to this embodiment is used as the nonaqueous electrolyte.

Examples

Hereinafter, the present disclosure will be specifically described based on examples, but the present disclosure is not limited to the following examples.

(Batteries A1 to A20)

Nonaqueous electrolyte secondary batteries were produced and evaluated using the following procedures.

(1) Production of Positive Electrode

A positive electrode slurry was prepared by mixing 100 parts by mass of positive electrode active material particles ($LiNi_{0.88}Co_{0.09}Al_{0.03}O_2$), 1 part by mass of carbon nanotubes, 1 part by mass of polyvinylidene fluoride, and an appropriate amount of N-methyl-2-pyrrolidone (NMP). Then, a coating film was formed by applying the positive electrode slurry to one side of an aluminum foil. The coating film was then dried and rolled. A positive electrode including the aluminum foil and positive electrode mixture layers (thickness was 95 μm, density was 3.6 g/cm$^3$) formed on both surfaces of the aluminum foil was obtained in this manner.

(2) Production of Negative Electrode

A negative electrode slurry was prepared by mixing 98 parts by mass of a negative electrode active material (graphite), 1 part by mass of carboxymethyl cellulose sodium salt (CMC-Na), 1 part by mass of SBR, and an appropriate amount of water. Then, a coating film was formed by applying the negative electrode slurry to one side of a copper foil,

which is a negative electrode current collector. The coating film was then dried and rolled. A negative electrode including the copper foil and negative electrode mixture layers formed on both surfaces of the copper foil was obtained in this manner.

(3) Preparation of Nonaqueous Electrolyte (Electrolyte Solution)

An electrolyte solution (non-aqueous electrolyte) was prepared by dissolving $LiPF_6$ and the heterocyclic compound (C) in a mixed solvent of ethylene carbonate (EC) and ethyl methyl carbonate (EMC) (EC:EMC=3:7 (volume ratio)). The concentration of $LiPF_6$ in the electrolyte solution was 1.0 mol/L. Compounds shown in Table 1 were used as the heterocyclic compounds (C). The content rates (concentrations) of the heterocyclic compounds (C) in electrolyte solutions were set to values shown in Table 1.

(4) Production of Nonaqueous Electrolyte Secondary Battery

A positive electrode was cut into a predetermined shape. Then, a portion of the positive electrode mixture layer was scraped off to expose the positive electrode current collector, which was used as a region for connection with a tab lead. In this manner, a positive electrode including a region (size: 20 mm×20 mm) functioning as the positive electrode, and the region for connection with the tab lead was obtained. Spherical copper particles (with a diameter of about 100 μm) were intentionally embedded near the center of the positive electrode mixture layer. Then, the exposed portion of the positive electrode current collector was connected to the positive electrode tab lead. A predetermined region on an outer periphery of the positive electrode tab lead was covered with an insulating tab film. A positive electrode for evaluation was obtained in this manner.

A negative electrode was cut into a shape similar to that of the positive electrode. Then, a negative electrode including a region functioning as the negative electrode, and a region for connection with a tab lead was obtained by performing processes similar to that for the positive electrode. Then, the exposed portion of the negative electrode current collector was connected to a negative electrode tab lead. A predetermined region on an outer periphery of the negative electrode tab lead was covered with an insulating tab film. A negative electrode for evaluation was obtained in this manner.

A battery was produced using the positive electrode for evaluation and the negative electrode for evaluation. First, an electrode group was obtained by arranging the positive electrode and the negative electrode such that the positive electrode mixture layer and the negative electrode mixture layer faced each other with a separator interposed therebetween. A polyethylene separator (with a thickness of 12 μm) was used as the separator. Then, an Al laminate film (with a thickness of 100 μm) cut to a rectangle (60 mm×90 mm) was folded in half. End portions of the folded laminate film on its long sides with a length of 60 mm were then heat-sealed to form a tubular shape of 60 mm×45 mm. Thereafter, the produced electrode group was placed in the tube. Then, an end surface of the Al laminate film and the thermal welding resin of the tab leads were positioned and sealed. The nonaqueous electrolyte solution was injected from the short side of the Al laminate film that was not heat-sealed, to impregnate the mixture layers with the nonaqueous electrolyte solution. Lastly, the end surface of the Al laminate film on the side where the electrolyte solution was injected was sealed to obtain the batteries A1 to A20 for evaluation.

(Battery C1)

A battery C1 of a comparative example was produced using methods and conditions that were similar to those for producing the battery A1, except that the electrolyte solution (nonaqueous electrolyte) was changed. An electrolyte solution of the battery C1 was prepared using methods and conditions that were similar to those for preparing the electrolyte solution of the battery A1, except that the heterocyclic compound (C) was not added to the electrolyte solution of the battery C1.

(5) Evaluation

A reference battery R1 for reference was produced. The configuration of the reference battery R1 was the same as the configuration of the battery A1, except that spherical metal copper particles were not embedded in the positive electrode and the heterocyclic compound (C) was not added to the nonaqueous electrolyte. The obtained reference battery R1 was charged at a constant current of 0.05 C in an environment at a temperature of 25°C until the battery voltage reached 4.2 V Then, the battery was discharged at a constant current of 0.05 C until the battery voltage reached 2.5 V, and a charge-discharge curve was obtained. The battery was left in an open circuit for 20 minutes between charging and discharging.

Each of the produced batteries for evaluation was sandwiched between a pair of clamps made of stainless steel (with a thickness of 2 mm) and fixed under a pressure of 0.2 MPa.

The batteries for evaluation were evaluated using the following method. First, in an environment at temperature of 25°C, each battery was charged at a constant current of 0.3 C until the voltage reached 3.58 V, and then charged at a constant voltage of 3.58 V until the current reached 0.02 C. Then, the battery was stored in an environment at a temperature of 25°C, and a battery voltage Vi after a lapse of 48 hours and a battery voltage $V_2$ after a lapse of 72 hours were measured.

The state of charge $SOC_1$ after a lapse of 48 hours and the state of charge $SOC_2$ after a lapse of 72 hours were determined using the battery voltages Vi and $V_2$, based on the charge-discharge curve of the reference battery R1. Then, the self-discharge rate sd per day was derived and evaluated based on the following formula.

$$\text{Self-discharge rate sd (\%/day)} = SOC_1\ (\%) - SOC_2\ (\%)$$

Table 2 shows some of battery production conditions and the results of evaluating the self-discharge rates sd.

[Table 2]

| Battery | Heterocyclic Compound (C) | | Self-Discharge Rate sd (%) |
|---|---|---|---|
| | Type | Content Rate (%) | |
| A1 | 4,5-dimethyl-1,3-thiazole-2-carbaldehyde | 0.01 | 6.8 |
| A2 | | 0.1 | 3.5 |
| A3 | | 1.0 | 1.6 |
| A4 | | 5.0 | 1.7 |
| A5 | | 10.0 | 1.9 |
| A6 | 4,5,6,7-tetrahydro-1,3 -benzothiazole-2-carbaldehyde | 0.01 | 6.9 |
| A7 | | 0.1 | 4.7 |
| A8 | | 1.0 | 1.6 |
| A9 | | 5.0 | 1.8 |
| A10 | | 10.0 | 1.9 |
| A11 | 2-ethylthiomorpholine4-carbaldehyde | 0.01 | 6.7 |
| A12 | | 0.1 | 3.4 |
| A13 | | 1.0 | 1.6 |
| A14 | | 5.0 | 1.7 |
| A15 | | 10.0 | 1.8 |
| A16 | 2,3-dimethylthiomorpholine-4-carbaldehyde | 0.01 | 6.6 |
| A17 | | 0.1 | 2.5 |
| A18 | | 1.0 | 1.5 |
| A19 | | 5.0 | 1.6 |
| A20 | | 10.0 | 1.8 |
| C1 | Not added | 0.0 | 7.3 |

The structure of 4,5-dimethyl-1,3-thiazole-2-carbaldehyde used as the heterocyclic compound (C) is shown below.

[Chemical Formula 4]

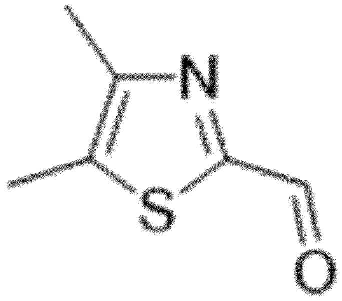

The structure of 4,5,6,7-tetrahydro-1,3-benzothiazole-2-carbaldehyde used as the heterocyclic compound (C) is shown below.

[Chemical Formula 5]

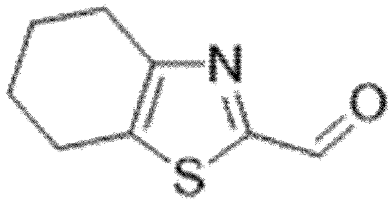

The structure of 2-ethylthiomorpholine-4-carbaldehyde used as the heterocyclic compound (C) is shown below.

[Chemical Formula 6]

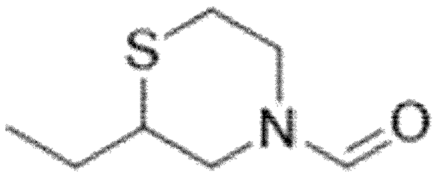

The structure of 2,3-dimethylthiomorpholine-4-carbaldehyde used as the heterocyclic compound (C) is shown below.

[Chemical Formula 7]

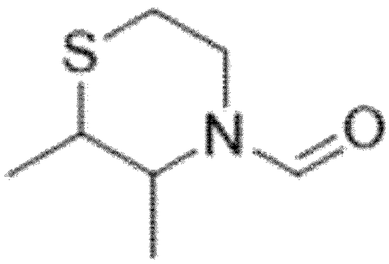

As shown in Table 2, the batteries A1 to A20 to which the heterocyclic compounds (C) were added each had a lower self-discharge rate sd than the battery C1 of the comparative example. It is conceivable that this is because the heterocyclic compounds (C) captured dissolved copper ions.

[Industrial Applicability]

The present disclosure relates to a nonaqueous electrolyte and a nonaqueous electrolyte battery.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: Electrode group, 2: Positive electrode lead, 3: Negative electrode lead, 4: Battery case, 5: Sealing plate, 6: Negative electrode terminal, 7: Gasket, 8: Sealing plug

## Claims

**1.** A nonaqueous electrolyte for a nonaqueous electrolyte battery, comprising:

a nonaqueous solvent;
an electrolyte; and
a heterocyclic compound containing at least one electron-withdrawing group R and a heterocyclic ring,
wherein the electron-withdrawing group R contains oxygen and/or nitrogen, and
the heterocyclic ring contains nitrogen and sulfur.

**2.** The nonaqueous electrolyte according to claim 1,
wherein a content rate of the heterocyclic compound is 0.01% by mass or more and 10.0% by mass or less.

**3.** The nonaqueous electrolyte according to claim 1 or 2,

wherein the electron-withdrawing group R includes at least one selected from the group consisting of a carbonyl group, a nitrile group, a sulfonyl group, an isocyanate group, an isothiocyanate group, and a hydroxy group, and the hydroxy group is bonded to carbon that constitutes a saturated hydrocarbon group.

**4.** The nonaqueous electrolyte according to claim 3,
wherein the carbonyl group is included in at least one selected from the group consisting of an aldehyde group, a ketone, an amide bond, an ester bond, and a carboxy group.

**5.** The nonaqueous electrolyte according to any one of claims 1 to 4,
wherein the heterocyclic ring includes at least one selected from the group consisting of a thiazole ring, a thiomorpholine ring, and a thiazepine ring.

**6.** The nonaqueous electrolyte according to claim 1 or 2,
wherein the heterocyclic compound includes at least one selected from the group consisting of 4,5-dimethyl-1,3-thiazole-2-carbaldehyde, 4,5,6,7-tetrahydro-1,3-benzothiazole-2-carbaldehyde, 2-ethylthiomorpholine-4-carbaldehyde, and 2,3-dimethylthiomorpholine-4-carbaldehyde.

**7.** A nonaqueous electrolyte battery comprising:

a positive electrode containing a positive electrode active material;
a negative electrode opposing the positive electrode; and
the nonaqueous electrolyte according to any one of claims 1 to 6.

**8.** The nonaqueous electrolyte battery according to claim 7,

wherein the positive electrode active material has a layered rock salt type structure,
the positive electrode active material includes a lithium transition metal composite oxide containing Ni and at least one selected from the group consisting of Co, Mn, and Al, and

the proportion of Ni in metal elements other than Li contained in the lithium transition metal composite oxide is 80 atomic% or more.

FIG. 1

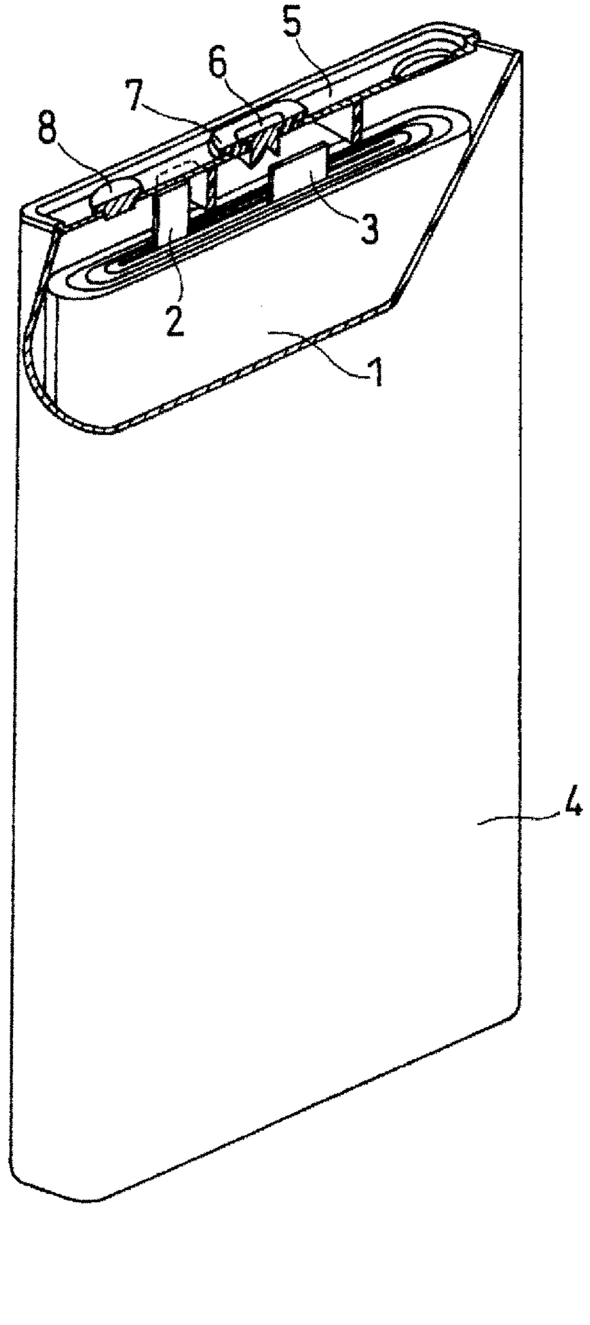

**INTERNATIONAL SEARCH REPORT**

International application No. **PCT/JP2023/002697**

**A. CLASSIFICATION OF SUBJECT MATTER**

***H01M 10/0567***(2010.01)i; ***H01M 4/505***(2010.01)i; ***H01M 4/525***(2010.01)i; ***H01M 10/052***(2010.01)i
FI: H01M10/0567; H01M4/505; H01M4/525; H01M10/052

According to International Patent Classification (IPC) or to both national classification and IPC

**B. FIELDS SEARCHED**

Minimum documentation searched (classification system followed by classification symbols)

H01M10/0567; H01M4/505; H01M4/525; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-060734 A (GS YUASA CORP.) 30 March 2015 (2015-03-30)<br>claims 1, 4, 6, paragraphs [0021], [0027]-[0029], [0038], [0039], [0045], examples | 1-3, 5, 7 |
| Y | | 8 |
| A | | 4, 6 |
| Y | WO 2021/220601 A1 (PANASONIC IP MANAGEMENT CORP.) 04 November 2021 (2021-11-04)<br>paragraphs [0034]-[0036] | 8 |
| Y | WO 2021/240926 A1 (PANASONIC IP MANAGEMENT CORP.) 02 December 2021 (2021-12-02)<br>paragraphs [0035]-[0037] | 8 |
| A | WO 2010/053162 A1 (MITSUI CHEMICALS, INC.) 14 May 2010 (2010-05-14)<br>entire text | 1-8 |
| A | WO 2020/115938 A1 (PANASONIC IP MANAGEMENT CORP.) 11 June 2020 (2020-06-11)<br>entire text | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 March 2023** | **28 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/002697**

| Patent document cited in search report | Publication date (day/month/year) | Patent family member(s) | Publication date (day/month/year) |
|---|---|---|---|
| JP 2015-060734 A | 30 March 2015 | (Family: none) | |
| WO 2021/220601 A1 | 04 November 2021 | (Family: none) | |
| WO 2021/240926 A1 | 02 December 2021 | (Family: none) | |
| WO 2010/053162 A1 | 14 May 2010 | (Family: none) | |
| WO 2020/115938 A1 | 11 June 2020 | US 2020/0343590 A1<br>entire text<br>CN 111527637 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5935228 B